# EUROPEAN PATENT APPLICATION

(11) **EP 2 153 714 A1**
(43) Date of publication of application: **17.02.2010**
(21) Application number: 07817037.0
(22) Date of filing: 30.09.2007
(51) Int. Cl.: A01G 29/00, A01G 25/06, A01G 27/00

(54) **IRRIGATION METHOD WITH SEMI PERMEABLE MEMBRANE, IRRIGATION CONTAINER AND IRRIGATION SYSTEM MADE OF SEMI PERMEABLE MEMBRANE AND THEIR APPLICATION**

(30) Priority: 29.04.2007 CN 200710072157
(71) Applicant: Yang, Qingli, E-9B, Huaqiaocheng swan Nanshan Shenzhen Guangdong 518053 (CN)
(72) Inventor: Yang, Qingli, E-9B, Huaqiaocheng swan Nanshan Shenzhen Guangdong 518053 (CN)
(74) Representative: Jeannet, Olivier
(86) International application number: PCT/CN2007/070846
(87) International publication number: WO 2008/131625

(57) **Abstract**

An irrigation method with semi permeable membrane includes the steps: making into long irrigation time container (15) or long irrigation time container irrigation system made of semi permeable membrane for irrigation in the field of framing and forestry; repeatedly or continuously adding water to the long irrigation time container or long irrigation time container irrigation. It makes use of the physical character of semi permeable membrane, and bases the principle of the potential energy of two sides of semi permeable membrane driving water to directional move. The outside wall (1) of the long irrigation time container is made of semi permeable membrane by heating, mechanical sealing or blowing molding, and water inlet (4) is formed on said outside wall. Multiple of the long irrigation time containers are connected by water feeding pipeline formed by main pipe-line (12) and sub-pipelines (13) attached to main pipe-line, to form network long irrigation time container irrigation system. Each long irrigation system time container of the system corresponds to a water supply head. The long irrigation time container with snap sealing (2, 3) that can be opened and closed repeatedly is applied in salina to clear away salt and alkali.

## Description

### FIELD OF THE INVENTION

The present invention relates to an irrigation method using permeable material for agriculture and forestry, and the device for said method and manufacture procedure thereof.

### DESCRIPTION OF PRIOR ART

It is estimated that 50% of the total consumption of our water resource is for agricultural irrigation. Since the global water shortage is an inevitable problem, thus to find a way to save and reduce our water consumption has become an issue that needs our imminent attention and solution. The traditional irrigation method has low effectiveness; only 10% of irrigating water is actually used for the harvest, which means other 90% has been wasted. Besides the low effectiveness, traditional irrigation method also causes environmental problem, such as the salinization of the soil. Better irrigation methods for providing higher effectiveness to up to a 50% has been disclosed and utilized. However, there is still half of irrigation water is wasted.

### SUMMARY OF THE INVENTION

The present invention relates to an irrigation method formed by the device made of a semi permeable membrane to extend the irrigation time and increase the effectiveness up to a 90% to reduce water waste efficiently.

The feature of the semi permeable feature utilized for the present invention is that the potential energy of two sides of the semi permeable membrane is able to drive water to directional move. By using an irrigation device made of the semi permeable membrane or an irrigation system formed by multiple of said irrigation devices for farming or forestry irrigation by repeatedly or continuously adding water thereto.

Said irrigation device is a long irrigation time container which the outside wall thereof is made of semi permeable membrane by heating, mechanical sealing, and a water inlet (4) is formed on said outside wall.

The outside wall of said long irrigation time container can also be made of a high molecular material which possesses semi permeable membrane feature through blowing molding, and a water inlet is formed on said outside wall.

An irrigation system with said long irrigation time containers is realized by connecting plurality of said long irrigation time containers with a water feeding pipeline formed by a main pipe-line and pluralities of sub-pipelines attached to the main pipe-line, to form a network long irrigation time container irrigation system. Each of said long irrigation time containers serves as a water supply head.

By connecting said long irrigation time containers with said main pipe-line, each of the long irrigation time containers of said irrigation system serves for both water supply and water transportation.

By replacing a seal end of said long irrigation time container with a clasp seal, aforementioned irrigation system can be served to eliminate the alkaline of the soil.

Said long irrigation time container and irrigation system can also be embedded underground for irrigating directly the root of the plant.

### ADVANTAGE OF THE INVENTION

### 1. Concept

The present invention achieves its advantage by utilizing the feature of a semi permeable membrane. The semi permeable membrane is a membrane existed within a plant, which allows water or other substance to pass through by unidirectional permeating, providing nutrient to the plant. The unidirectional permeating is activated when the potential energy of two sides of the semi permeable membrane are different. The side has higher potential energy performs the unidirectional permeation toward the side with lower potential energy. The unidirectional permeation is terminated until potential energy of two sides of the membrane reaches the balance.

By applying the concept to irrigating the soil, water inside the long irrigation time container, which is made of semi permeable membrane, passes through the membrane and reaches the soil. The dryer the soil, the permeating rate is relatively faster and higher. When moisture content of the soil increased, the permeating rate is reduced until it reaches the maximum, the permeation stops. The balance is maintained until the moisture content of the soil starts to reduce, thus the permeating process initiates again.

According to the above description, when a container made of semi permeable membrane is provided under the ground, the water within the container passes through the membrane toward the soil automatically when the moisture content of the soil is low. By applying this device close to the root of a plant, the root absorbs water within the soil for obtaining nutrient to grow, making the moisture content to drop. The potential difference between water with the container and moisture content of the soil causes the permeating process to initiate. When the root absorbs more water from the soil, the faster rate of permeating process is generated, making the device an automatic irrigating device with no manual setting required.

When a plant is irrigated by a traditional device with one liter of water, the plant is wilting forty eight hours later. However, by irrigating one liter of water with a device made of semi permeable membrane, the plant can live for at least twenty-five days. As demonstrated by experiment, the device made of semi permeable membrane can extend the irrigating time, making the device more efficiently than the conventional irrigating device. The irrigating device disclosed in the present invention is called long irrigation time container. By connecting multiples long irrigation time containers with a water feeding pipeline, a network of irrigating system made of long irrigation time containers can be formed.

### 2. Advantage comparing with prior art

1. On contrary with conventional irrigation device which is installed above the ground, the present invention is provided under the ground. The soil covered the system reduces the evaporation caused by heat.
2. The irrigating time and volume of conventional device is set manually, the operating accuracy varied by the setting. The present invention, however, requires no manual setting, the irrigating time and volume are adjusted automatically depending the evaporation rate of the soil and plant, makes it favorable for the growth of the plant.
3. Conventional irrigating device requires additional device for providing power to drive said irrigating device, the power device consumes fuel or electricity and requires constantly maintenance, generating unnecessary cost. The present invention is driven and controlled automatically with no additional energy required, suitable for area where energy is difficult to obtain.
4. The method and device disclosed in the present invention are not only for agricultural or forestry irrigation, but also for treating alkaline soil.
5. Lower manufacturing cost with simpler structure.

### BRIEF DESCRIPTION OF DRAWING

Fig. 1 is a schematic view of the long irrigation time container.
Fig. 2 is a schematic view of a irrigation system formed by the long irrigation time containers.
Fig. 3 is a schematic view of a irrigation system formed by multiples tubular long irrigation time containers.

### DETAILED DESCRIPTION OF PREFERRED EMBODIMENTS

### First Embodiment

### Long irrigation time container:

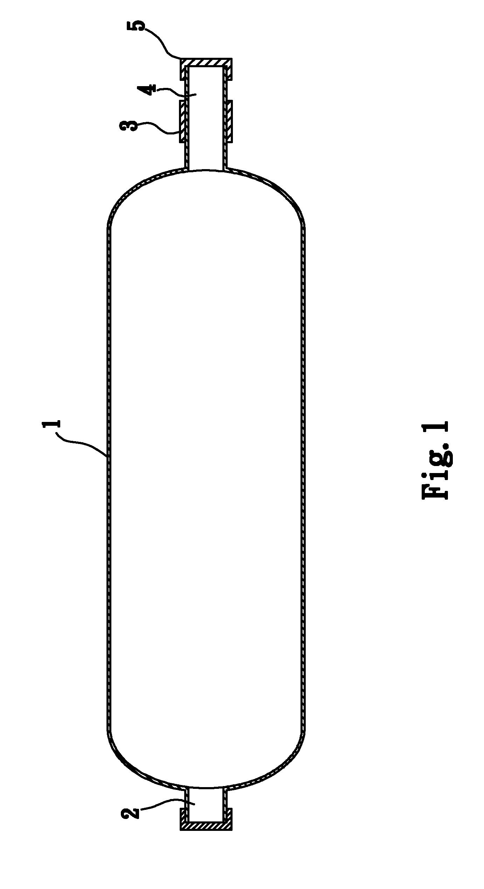

Fig. 1 illustrating a schematic view of a long irrigation time container (15). The material for manufacturing said container should be select from material has feature that can be made into semi permeable membrane with high strength, such as collodion, film forming fiber, PVA-Amylum-Glacerol polymer or some PE modified resin.

By casting or extruding according to the property of said materials, filming or tubular membrane is processed with a thickness between 5-20 µm. When membrane is too thin, the container is easily damage by other farm machinery; if membrane is too thick, the permeating rate will be reduced and affecting the effect of the membrane. The predetermined thickness is set to ensure the permeating rate of the semi permeable membrane is maintained about 100ml/m² per day when the soil water potential is 3 pF.

For some plant that requires higher water supply, the thickness of the membrane and volume of the container can be adjusted to fit the requirement.

The container (15) with a water inlet (4) as shown in Fig. 1 can be manufactured by blow molding if it fits the feature of the material. For other materials, they have to be manufactures into filming or cylindrical membrane, then processed by heating or mechanical sealing to form the container (15) having a tubular water inlet (4) with a cap (5).

For irrigating the plant, water is added into said long irrigation time container (15) and placed into a hole with predetermined depth between 10 and 20 cm about the root. A soil with thickness in a range of 5 to 10 cm is provided to cover the container (15), leaving the water inlet (4) above the ground to refill the container (15).

### Second Embodiment

### Manufacture and application of long irrigation time container irrigation system:

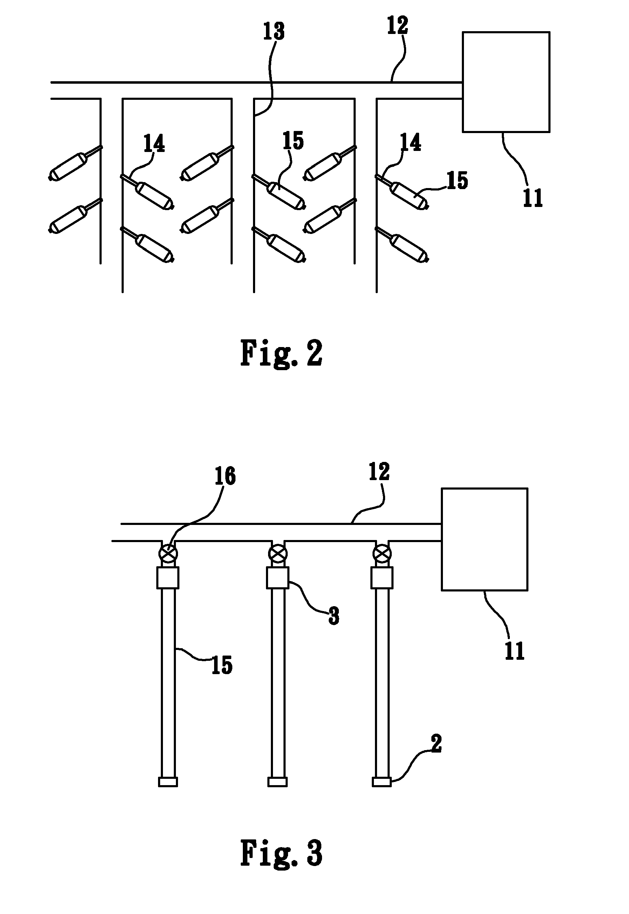

Referring to Fig. 2 is a network of irrigating system by connecting multiples long irrigation time containers (15) to a network of main pipeline (12) and multiples sub- pipelines (13). Plant is planted about each long irrigation time container (15), thus water transported from the main pipeline (12) can supply the container (15) and irrigating the plant. Said irrigating system is similar to a drip irrigating system wherein each container (15) functioned as a drip emitter. However, the irrigating system disclosed herein is more effective relating the wastage of water, and no additional device is required for pumping pressure or driving the system. The system is preferably for application in a fruit ranch, nursery garden, or economic forest of large area.

### Third embodiment

As shown in Fig. 3 is another method for connecting long irrigation time containers (15) to a network of pipeline. Multiples cylindrical long irrigation time containers (15) replace said sub-pipelines (13), and connect directly to the main pipeline (12). The cylindrical container (15) adds moisture not only to the soil close to the plant but also to the soil about the whole irrigating system. Said irrigating system can replace conventional spray or drip irrigating system, suitable for massive plantation.

### Fourth embodiment:

Another purpose of the irrigating system disclosed in the present invention is to desalt the soil. By installing the irrigating system 10 cm under the saline-sodic soil, and filled the system with water through a reservoir (11); the moisture content and saline-alkaline of the soil with small amount of water permeating from the irrigating system forming a high concentrated solution. Although the water potential inside the long irrigation time container (15) is higher than of the soil, but high concentrated saline alkaline ion inverts the unidirectional move of the semi permeable membrane. Making the saline alkaline ion permeates into the container (15), and reduces the salinity contained with the soil. When saline alkaline ion between two sides of the semi permeable membrane reaches the balance, the supply valve (3) is sealed and the clasp seal (6) is opened to guide out the saline alkaline solution in the irrigating system, then the clasp seal (6) is closed and the system is refilled with water again, and said desalting process is repeated to form a cycle. By repeating said cycle 20 times within three months, the percentage of saline alkaline of the soil can be reduced from 0.5% to 0.4%,. The water usage, however, is only 5% of the conventional washing method.

For soil that has different concentration of salinity, separated long irrigation time container can be placed into higher concentrated salting spots firstly before the above method is applied.

Said pipelines, membrane or container consists essentially of a thermoplastic host material and inertial filler having added into said host material. Said inert filler is covered by a separant. The ratio of the inert filler and host material can be selected from 5, 10, 15, 20, 25 or 30: 100, and the ratio of the inert filler and the separant is in a range of 100:5 to 100:10.

The permeating rate of the present invention is varied with the thickness of the membrane, the percentage and particle of the inert filler. The preferred percentage of the inert filler is between 5% and 30%, the permeation of membrane is produced when the percentage of inert filler is higher than 5%. However, when percentage exceeds 30%, the strength of the membrane is weakened and the service life thereof is reduced.

When the particle of the filler is finer, pores created for the membrane is also increasing. The preferable number of pores is in a range of 80 to 300 pores. When the pores exceeds 300 pores, the manufacture cost is also increased, which decreasing economic benefit.

When the thickness of the outside wall (1) of the container (15) is increased; therefore, the pores or passage for permeation is reduced. However, when the thickness is too thin, the strength of the container (15) is weakened.

The manufacture steps for producing aforementioned membrane or device includes:
a. Adding predetermined inertial filler as disclosed above into a mixer, and then 5 to 10% separant is added gradually into the mixer and mixed evenly.
b. Powdered thermoplastic host material is added into a high speed kneading machine, then a predetermined processed filler from step a is added into the machine, with color and plasticizer added and mixed evenly.
c. Placing the polymer into a pelletizer for producing pellets.
d. Placing the pellets into an extruding machine for manufacturing the semi permeable tube, membrane or container.

## Claims

1. An irrigation method using semi permeable membrane is **characterized in that** by utilizing a long irrigation time container made of semi permeable membrane or an irrigation system formed by said long irrigation time container for irrigation in a field of framing and forestry; repeatedly or continuously adding water to said long irrigation time container or the irrigation system.

2. A long irrigation time container of claim 1 is **characterized in that** an outside wall thereof is made of semi permeable membrane by heating, mechanical sealing, and a water inlet (4) is formed on said outside wall.

3. A long irrigation time container of claim 1 is **characterized in that** an outside wall thereof is made of a high molecular material which possesses semi permeable membrane feature through blowing molding, and a water inlet is formed on said outside wall.

4. An irrigation system with a long irrigation time container of claim 1 is **characterized in that** a pluralities of said long irrigation time containers are connected by a water feeding pipeline formed by a main pipe-line and pluralities of sub-pipelines attached to the main pipe-line, to form a network long irrigation time container irrigation system; each of said long irrigation time containers serves as a water supply head.

5. An irrigation system with a long irrigation time container of claim 4, wherein by connecting a plurality of tubular long irrigation time containers with said main pipe-line, each of said long irrigation time container serves for both water supply and water transportation.

6. An irrigation system with a long irrigation time container of claim 5, wherein when a seal end of said tubular long irrigation time container is a clasp seal, said irrigation system is applicable for desalting a soil.

7. A long irrigation time container and an irrigation system made thereof as claimed in claims 1 to 6, wherein said long irrigation time container and irrigation system are provided under the soil for irrigating specifically a root area of a plant.

8. A long irrigation time container of claims 2 and 3, wherein said container is utilized for desalting a salting stain of a soil.
